# EUROPEAN PATENT SPECIFICATION

(11) **EP 4 676 708 B1**
(45) Date of publication and mention of the grant of the patent: **14.10.2026**
(21) Application number: 24714963.6
(22) Date of filing: 04.04.2024
(51) Int. Cl.: B29C 44/42, B29C 45/77

(54) **PROCESS FOR FORMING A FOAMED ARTICLE WITH IMPROVED SURFACE AESTHETICS**
VERFAHREN ZUR HERSTELLUNG EINES SCHAUMSTOFFARTIKELS MIT VERBESSERTER OBERFLÄCHENÄSTHETIK
PROCÉDÉ DE FABRICATION D'UN ARTICLE EN MOUSSE PRÉSENTANT UNE ESTHÉTIQUE DE SURFACE AMÉLIORÉE

(30) Priority: 11.04.2023 EP 23167444
(43) Date of publication of application: 14.01.2026
(73) Proprietor: SABIC Global Technologies B.V., 4612 PX Bergen op Zoom (NL)
(72) Inventor: CHU, Kar-Man Raymond, 6160 GA Geleen (NL); YANEV, Angel Stoyanov, 6160 GA Geleen (NL); WINTERS, Gertrudis, 6160 GA Geleen (NL); BANDE MARTINEZ, Daniel, 6160 GA Geleen (NL)
(74) Representative: Sabic Intellectual Property Group
(86) International application number: PCT/EP2024/059213
(87) International publication number: WO 2024/213467

(56) References cited:
- EP-A1- 1 250 994
- EP-A1- 3 763 502
- EP-A1- 3 782 789
- EP-A1- 4 026 680
- WO-A1-2020/236756
- GB-A- 1 300 553

## Description

### TECHNICAL FIELD

The present disclosure relates to processes for forming a foamed article and foamed articles formed thereby, and more particularly, to processes for forming a foamed article by foam injection molding and foamed articles formed thereby, which have improved and desirable surface aesthetics.

### BACKGROUND

Foaming, or foam injection molding, can offer potential to decrease weight of vehicle parts made via injection molding. Surface defects such as silver-streaks or tiger-stripes formed during mold filling with gas-loaded melt can deteriorate vehicle part surface aesthetics.

Foam for use in applications in which surface aesthetics is important can be formed using a specialized molding process, e.g., gas-counter pressure or rapid-heating-and-cooling, which can be complex to implement and operate and incur additional tool costs. A gas-counter pressure method can avoid silver-streaks. The use of a gas-counter pressure method can complicate the processing and increase the costs of tooling.

The gas-counter pressure method involves pre-pressurizing a mold cavity with gas (e.g., air or nitrogen) while a polymer melt enters and fills the mold cavity. The presence of the pre-pressurization can prevent gas in the polymer melt from migrating to a surface of the foam and appearing as silver-streaks, deteriorating the surface aesthetics. A gas-counter pressure tool can include additional ports for pressurized gas injection and release and a gas-counter pressure system can control the timely pressurization and depressurization of the pressurized gas. Optimizing the injecting sequence to not interfere with the pressurization/depressurization sequence can be difficult. The gas-counter pressure method may not be appropriate depending on vehicle part design (e.g., parts including multiple cavities or multiple parts).

The rapid-heating-and-cooling method involves rapidly heating a mold tool surface to an elevated temperature (e.g., 140 °C) to re-melt and flatten silver-streaks; and then rapidly cooling. The method can include complex tooling design that incorporates additional rapid heating/cooling channels/circuitries; and the operation of the method often incurs high energy consumption and longer cycle times.

Thus, an interest exists for improved processes for forming a foamed article and related technologies. Prior inefficiencies and opportunities for improvement are addressed and/or overcome by the disclosed processes and foamed articles of the present disclosure. EP4026680A1 discloses a process for forming a foamed article comprising: injecting a molten mixture comprising a foaming agent, and a polymer composition into a mold; and solidifying the molten mixture in the mold to form the foamed article.

### SUMMARY

According to the invention, a process for forming a foamed article comprises injecting a molten mixture comprising a foaming agent and a polymer composition into a mold; and solidifying the molten mixture in the mold to form the foamed article, wherein the injecting comprises controlling a flow length to thickness ratio of the molten mixture to be less than 160, or less than 120, and controlling an in-mold linear speed of the molten mixture to be 40 to 140 centimeters per second or 50 to 120 centimeters per second.

These and other features and characteristics are more particularly described below.

Any combination or permutation of embodiments is envisioned. Additional features, functions and applications of the disclosed processes and foamed articles of the present disclosure will be apparent from the description which follows, particularly when read in conjunction with the appended figures.

### BRIEF DESCRIPTION OF THE DRAWINGS

The following is a brief description of drawings wherein like elements are numbered alike and which is presented for the purposes of illustrating the different steps of a process for producing a foamed article and exemplary embodiments disclosed herein and not for the purposes of limiting the same.

Example embodiments of the present disclosure are further described with reference to the appended figures. It is to be noted that the various features, steps, and combinations of features/steps described below and illustrated in the figures can be arranged and organized differently to result in embodiments which are still within the scope of the present disclosure. To assist those of ordinary skill in the art in making and using the disclosed processes and foamed articles, reference is made to the appended figures, wherein:
FIG. 1 shows simulation results of in-mold linear speed of a molten mixture injected into a door panel mold with areas of surface defects found in a corresponding formed foamed article indicated;
FIG. 2A and FIG. 2B show surface aesthetic of foamed plaques of 120 millimeters (mm) by 80 mm by 2 mm molded at different conditions; and
FIG. 3A, FIG. 3B, and FIG. 3C show surface aesthetic of foamed plaques of 300 mm by 30 mm by 3 mm molded at different conditions.

These figures (also referred to herein as "FIG.") are merely schematic representations based on convenience and the ease of demonstrating the present disclosure, and are, therefore, not intended to indicate relative size and dimensions of the devices or components thereof and/or to define or limit the scope of the exemplary embodiments.

### DETAILED DESCRIPTION

The exemplary embodiments disclosed herein are illustrative of advantageous processes for forming a foamed article, and foamed articles formed thereby. It should be understood, however, that the disclosed embodiments are merely exemplary of the present disclosure, which may be embodied in various forms. Therefore, details disclosed herein with reference to exemplary processes and associated foamed articles and use are not to be interpreted as limiting, but merely as the basis for teaching one skilled in the art how to make and use the advantageous exemplary processes and/or foamed articles of the present disclosure.

The present disclosure provides for processes for forming a foamed article and foamed articles formed thereby. More particularly, the present disclosure provides for processes for forming a foamed article by foam injection molding and foamed articles formed thereby, which have improved and desirable surface aesthetics.

Current practice provides that it can be very difficult to form foamed article with desirable surface aesthetics. As an example, conventional specialized molding processes such as gas-counter pressure or rapid-heating-and-cooling can be complex to implement and operate and incur additional tool costs.

In exemplary embodiments, the present disclosure provides a foam injection molding process that can enable manufacture of lightweight polyolefin, for example, polypropylene, articles with excellent surface aesthetics. Also provided is a mold tool design for carrying out the process.

The disclosed foam injection molding process involves reducing or eliminating the occurrence of surface defects in foamed articles by properly balancing the flow length to thickness ratio of a molten mixture injected into a mold cavity and controlling in-mold linear speed of the molten mixture. It was surprising found that by controlling a flow length to thickness ratio of the molten mixture to be less than 160, or less than 120, and controlling an in-mold linear speed of the molten mixture to be 40 to 140 centimeters per second (cm/s), or 50 to 120 cm/s, the occurrence of surface defects in foamed articles could be reduced or eliminated. The process further includes solidifying the molten mixture in the mold to form the foamed article.

An injection molded article as described herein can have differing thicknesses, surface graining, and engineering features (e.g., fixing elements, bosses, ribs, doghouses, hooks, etc.). As used herein, the term "thickness" or "thick" refers to a resulting thickness calculated from dividing the part volume by its projected surface area. Engineering features as well as non-visible regions designed for part assembly and fixation purposes will not be considered in thickness calculation.

"Tiger-stripes" as used herein means a visual defect on the surface of the article, whereby a(n) (alternating) pattern of light and dark stripes can be observed. Tiger-stripes refers to color and gloss variations on the surface of an injection molded article, which can occur because of unstable mold filling properties of a molten mixture including a foaming agent and a polymer composition as it is being injected into the mold and formed into a desired shape. The variations can be observed as alternating areas of low and high gloss, light or darker color, or a combination thereof, wherein the areas usually are substantially perpendicular to the flow direction of an injection molded article. Tiger-stripes can occur in foamed articles including polyolefin, for example, polypropylene. Tiger-stripes are undesirable in vehicular applications, for example, where a foamed article including polyolefin, for example, polypropylene, is not provided with an additional layer such as paint or a laminating layer. The foamed article can include, in addition to or instead of polyolefin, Engineering Thermoplastics (ETP).

"Cloudiness" as used herein means a visual defect caused by a gas bubble coming to a surface of the article, migration of filler to the surface of the article under some shear conditions, or a combination thereof. When the defect is present in a large area, the defect can appear as cloudiness, and when the defect is present in a more concentrated (e.g., small) area, the defect can appear as silver-streaks.

In an embodiment, gating design with suitable size and geometries can be used to reduce excessive shear rate exerted on the molten mixture. The injecting can include opening a gate, for example, opening a gate gradually; closing a gate, for example, closing a gate gradually; or a combination thereof. Controlling the flow length to thickness ratio of the molten mixture can include providing multiple gating locations for injection of the molten mixture.

When material is subjected to higher shear rate, there is higher likelihood for gas bubbles to create silver-streaks. Shear rate can be dependent on gate dimensions and speed at which the molten mixture flows. Gate design, for example, dimensions, can influence shear rate of material passing through a given gate; the larger the cross section of the gate, the lower the shear rate. For foamed articles having a thickness of less than or equal to 2 mm (for example, vehicle interior trim parts), a gate can have a cross section of greater than 10 mm².

The multiple gating locations can include a first gating location and a second gating location downstream of the first gating location and controlling the flow length to thickness ratio of the molten mixture can include opening a first gate at the first gating location, injecting the molten mixture through the first gate, opening a second gate at the second gating location, injecting the molten mixture through the second gate when the molten mixture reaches the second gating location, and closing the first gate after opening the second gate.

Controlling the in-mold linear speed of the molten mixture can include controlling a number of injection gates that are opened. Controlling the in-mold linear speed of the molten mixture can include controlling an injection speed of the molten mixture. Controlling the injection speed of the molten mixture can include adjusting the injection speed based on a number of gates that are opened. More than one gate can be opened. The injecting can include injecting through a gate having a cross-sectional area of greater than or equal to 0.15 square centimeters (cm²) or greater than or equal to 0.4 cm².

The injecting can include injecting through a gate having a cross-sectional shape of a rectangle. The injecting can include injecting through a gate having a cross-sectional shape of an oval. The injecting can include injecting through a gate having a cross-sectional shape of a circle.

It was surprisingly found that in-mold linear speeds of the molten mixture of less than 40 cm/s are prone to formation of silver-streaks and flow length to thickness ratios of the molten mixture of greater than 160 are prone to tiger-stripes. Regions developed from gate with higher shear rate are found to be more susceptible to both silver-streak and tiger-stripe issues.

In an embodiment, a profiled screw ram-speed can be used to control the in-mold linear speed of the molten mixture to be 40 to 140 cm/s, for example, 50 to 120 cm/s to avoid formation of silver-streaks and tiger-stripes. Optimizing mold gating, gating sequence, and screw ram-speed profile can allow for excellent surface with foam injection molding without the use of a gas-counter pressure method, which can lead to significant reduction in cost and complexity in in applications in which surface aesthetics is important. Accordingly, desirable surface aesthetics can be attained for foamed articles formed by foam injection molding processes disclosed herein.

This disclosure is further illustrated by the following examples, which are nonlimiting.

### EXAMPLES

As used herein, flow length (L) is the distance a polymer molten mixture flows in a mold after exiting from a gate (before the mold is filled by the polymer molten mixture or before the flow is replaced by flow from another gate, e.g., a downstream gate). In-mold linear speed is the defined by the volumetric flow rate (cubic centimeters per second (cm³/s)) that the polymer molten mixture flow inside the mold divided by the cross-sectional area.

### Example 1

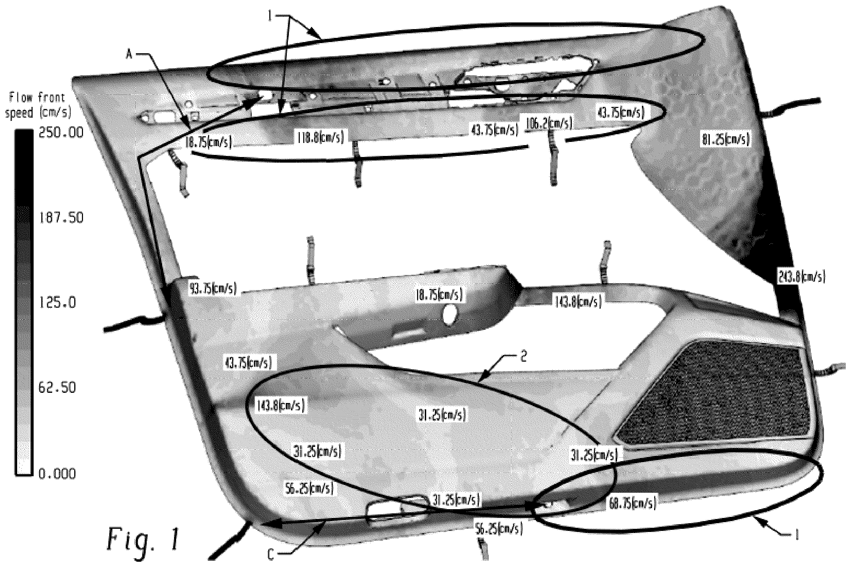

A foam injection molding trial with a door panel tool was conducted. The molding was performed on a 2300-ton injection molding machine. The injection moulding machine settings included a barrel temperature of 250 °C and a mould temperature of 60 °C. Pellets of a talc-filled polypropylene compound SABIC PP compound F9015 were dry-blended with 2% by weight of a chemical blowing agent masterbatch Hydrocerol ITP815, commercially available from Avient, to create a mixture of pellets. The mixture of the pellets was then added to the hopper of the machine for foam injection molding. Surface aesthetics of the foamed door panel was evaluated and compared with Moldflow simulation results. The process of the present disclosure will be illustrated in detail by way of making reference to the accompanied drawings. FIG. 1 shows the simulation results of in-mold linear speed of a molten mixture injected into a door panel mold with areas of surface defects found in a corresponding formed foamed article indicated. In FIG. 1, "A" represents a flow length of about 350 millimeters (mm) from a gate, and "C" represents a flow length of about 460 mm from a gate. As the foamed article was 1.8 mm thick, "A" represents a L/t of about 194, and "C" represents a L/t of about 256. In FIG. 1, "1" represents an area of the foamed article exhibiting tiger-stripes, "2" represents an area of the foamed article exhibiting silver-streaks/cloudiness. A L/t of about 194 ("A") resulted in tiger-stripes ("1") and a L/t of about 256 ("C") resulted in tiger-stripes ("1").

It was found that regions where tiger-stripes were visible are characterized with flow length of greater than 350 mm (corresponding to a L/t of greater than about 194). Regions with silver-streaks are characterized by an in-mold linear speed of the molten mixture of less than 40 centimeters per second (cm/s).

### Example 2

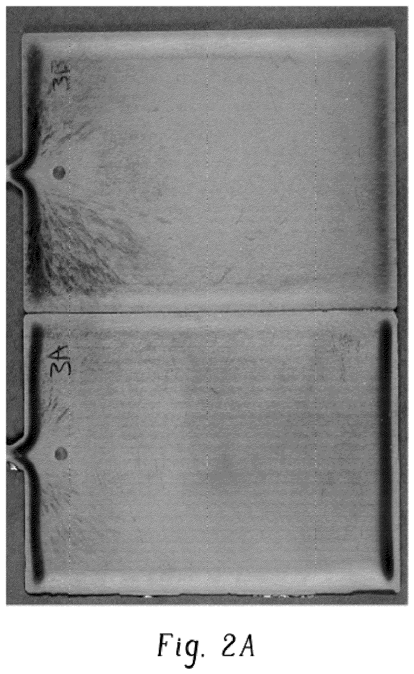

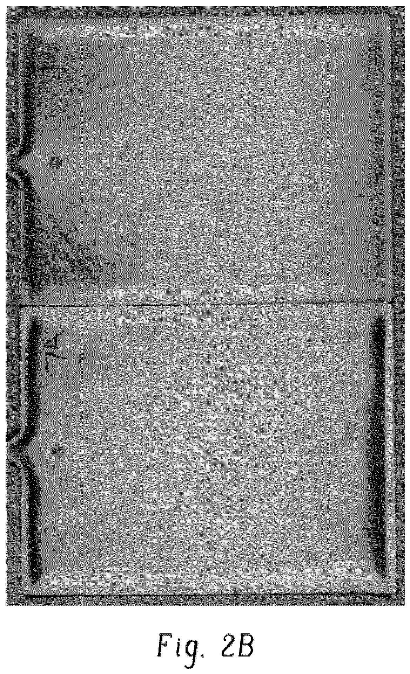

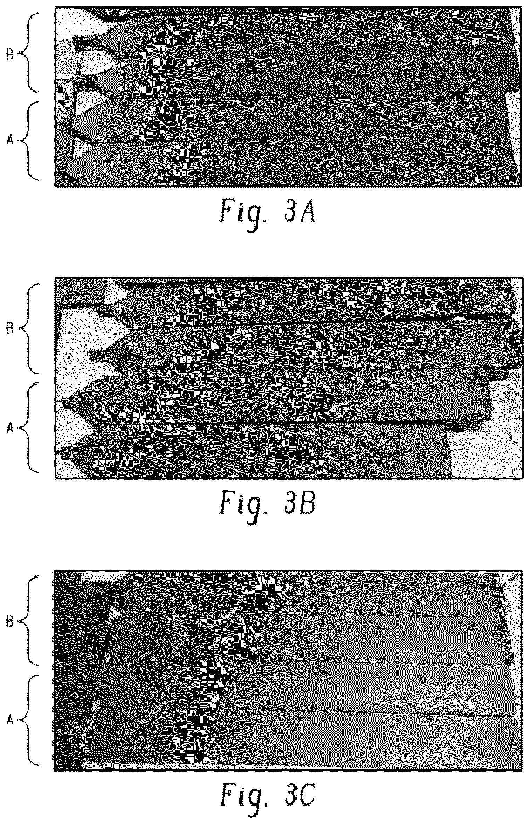

Foam injection molding was performed on 60-ton injection molding machine using tools with plaque geometries. The first set of runs was conducted using a plaque tool having geometry of 120 mm long by 80 mm wide by 2 mm thick. The injection moulding machine settings included barrel temperatures of 240 °C (FIG. 2A) and 260 °C (FIG. 2B) and a mould temperature of 60 °C. Pellets of a talc-filled polypropylene compound (same as Example 1) were dry-blended with 2% by weight of a chemical blowing agent masterbatch Hydrocerol ITP825, commercially available from Avient, to create a mixture of pellets. The mixture of the pellets was then added to the hopper of the injection moulding machine for foam injection molding. The second set of runs was conducted using a plaque tool having geometry of 300 mm long by 30 mm wide by 3 mm thick. (FIG. 3A, FIG. 3B, and FIG. 3C) The injection moulding machine settings included a barrel temperature of 240 °C and a mould temperature 30 °C. Pellets of the talc-filled polypropylene compound (same as Example 1) were dry-blended with 1.5% by weight of a chemical blowing agent masterbatch Hydrocerol ITP825 to create a mixture of pellets. The mixture of the pellets was then added to the hopper of the machine for foam injection molding.

The top sample shown in each of FIG. 2A and FIG. 2B was formed with linear in-mold speed of 33 cm/s and the bottom sample shown in each of FIG. 2A and FIG. 2B was formed with linear in-mold speed of 110 cm/s. FIG. 3A shows samples for linear in-mold speed of 16 cm/s, FIG. 3B shows samples for linear in-mold speed of 39 cm/s, and FIG. 3C shows samples for linear in-mold speed of 126 cm/s. The "A" samples in each of FIG. 3A, FIG. 3B, and FIG. 3C were formed using a gate having a cross-sectional area of 0.01 square centimeters (cm²) and the "B" samples in each of FIG. 3A, FIG. 3B, and FIG. 3C were formed using a gate having a cross-sectional area of 0.3 cm².

The following table details the effect of flow length to thickness ratio and speed on surface aesthetics. In the following table, "Plaque, L/t=60" denotes results for formation of a plaque 120 mm long and 2 mm thick (FIG. 2A and FIG. 2B); "Plaque, L/t=100" denotes results for formation of a plaque 300 mm long and 3 mm thick (FIG. 3A, FIG. 3B, and FIG. 3C); "Part, L/t>194" denotes results for formation of a door panel (FIG. 1) 350 mm long and 1.8 mm thick, and 460 mm long and 1.8 mm thick. Flow length to thickness ratio of less than or equal to 100 and speed greater than 40 cm/s to about 100 cm/s resulted in plaques with good surface aesthetics. In the table, "X" represents an unacceptable result and "∘" represents a very good result.

**Table 1**

| | | In-mold Speed | | |
|---|---|---|---|---|
| | | <40 cm/s | 40-140 cm/s | >140 cm/s |
| Silver-Streaks | Plaque, L/t=60 | X | ○ | |
| | Plaque, L/t=100 (0.01 cm² gate) | X | X | |
| | Plaque, L/t=100 (0.3 cm² gate) | X | ○ | |
| | Door, L/t<194 | X | ○ | X |
| | Door, L/t>194 | X | X | |
| Tiger-Stipes | Plaque, L/t=60 | ○ | ○ | |
| | Plaque, L/t=100 (0.01 cm² gate) | ○ | X | |
| | Plaque, L/t=100 (0.3 cm² gate) ^{[10]} | ○ | ○ | |
| | Door, L/t<194 | ○ | ○ | |
| | Door, L/t>194 | X | X | |

The term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g., fuels derived from resources other than petroleum). As referred to herein, a hybrid vehicle is a vehicle that has two or more sources of power, for example both gasoline-powered and electric-powered vehicles.

The terms "a" and "an" are defined as one or more unless this disclosure explicitly requires otherwise. For example, "an element" has the same meaning as "at least one element," unless the context clearly indicates otherwise. The term "combination" is inclusive of blends, mixtures, alloys, reaction products, and the like. Also, "at least one of" means that the list is inclusive of each element individually, as well as combinations of two or more elements of the list, and combinations of at least one element of the list with like elements not named. "Or" means "and/or." The suffix "(s)" as used herein is intended to include both the singular and the plural of the term that it modifies, thereby including one or more of that term (e.g., the film(s) includes one or more films).

## Claims

1. A process for forming a foamed article comprising:
injecting a molten mixture comprising a foaming agent and a polymer composition into a mold; and
solidifying the molten mixture in the mold to form the foamed article,
**characterized in that** the injecting comprises
controlling a flow length to thickness ratio of the molten mixture to be less than 160, or less than 120, and
controlling an in-mold linear speed of the molten mixture to be 40 to 140 centimeters per second or 50 to 120 centimeters per second.

2. The process according to Claim 1, wherein the injecting comprises opening a gate.

3. The process according to Claim 2, wherein the injecting comprises opening a gate gradually.

4. The process according to any of the preceding claims, wherein the injecting comprises closing a gate.

5. The process according to any of the preceding claims, wherein the injecting comprises closing a gate gradually.

6. The process according to any of the preceding claims, wherein controlling the flow length to thickness ratio of the molten mixture comprises providing multiple gating locations for injection of the molten mixture.

7. The process according to Claim 6, wherein:
the multiple gating locations comprise a first gating location and a second gating location downstream of the first gating location; and
controlling the flow length to thickness ratio of the molten mixture comprises
opening a first gate at the first gating location,
injecting the molten mixture through the first gate,
opening a second gate at the second gating location,
injecting the molten mixture through the second gate when the molten mixture reaches the second gating location, and
closing the first gate after opening the second gate.

8. The process according to any of the preceding claims, wherein controlling the in-mold linear speed of the molten mixture comprises controlling a number of injection gates that are opened.

9. The process according to any of the preceding claims, wherein controlling the in-mold linear speed of the molten mixture comprises controlling an injection speed of the molten mixture.

10. The process according to Claim 9, wherein controlling the injection speed of the molten mixture comprises adjusting the injection speed based on a number of gates that are opened.

11. The process according to Claim 10, wherein more than one gate is opened.

12. The process according to any of the preceding claims, wherein the injecting comprises injecting through a gate having a cross-sectional area of greater than or equal to 0.15 square centimeters or greater than or equal to 0.4 square centimeters.

13. The process according to any of the preceding claims, wherein the injecting comprises injecting through a gate having a cross-sectional shape of a circle.

14. The process according to any of the preceding claims, wherein the injecting comprises injecting through a gate having a cross-sectional shape of a rectangle.

15. The process according to any of the preceding claims, wherein the injecting comprises injecting through a gate having a cross-sectional shape of an oval.

## Patentansprüche

1. Prozess zur Herstellung eines Schaumstoffartikels, umfassend:
Einspritzen einer geschmolzenen Mischung, die ein Treibmittel und eine Polymerzusammensetzung umfasst, in eine Form; und
Verfestigen der geschmolzenen Mischung in der Form zur Herstellung des Schaumstoffartikels,
**dadurch gekennzeichnet, dass** das Einspritzen umfasst
Steuern eines Verhältnisses von Fließlänge zu Dicke der geschmolzenen Mischung derart, dass es weniger als 160 oder weniger als 120 beträgt, und
Steuern einer linearen Geschwindigkeit der geschmolzenen Mischung derart, dass sie 40 bis 140 Zentimeter pro Sekunde oder 50 bis 120 Zentimeter pro Sekunde beträgt.

2. Prozess nach Anspruch 1, wobei das Einspritzen das Öffnen einer Einspritzöffnung umfasst.

3. Prozess nach Anspruch 2, wobei das Einspritzen das allmähliche Öffnen einer Einspritzöffnung umfasst.

4. Prozess nach einem der vorstehenden Ansprüche, wobei das Einspritzen das Schließen einer Einspritzöffnung umfasst.

5. Prozess nach einem der vorstehenden Ansprüche, wobei das Einspritzen das allmähliche Schließen einer Einspritzöffnung umfasst.

6. Prozess nach einem der vorstehenden Ansprüche, wobei das Steuern des Verhältnisses von Fließlänge zu Dicke der geschmolzenen Mischung das Bereitstellen mehrerer Einspritzöffnungsstellen für die geschmolzene Mischung umfasst.

7. Prozess nach Anspruch 6, wobei:
die mehreren Einspritzöffnungsstellen eine erste Einspritzöffnungsstelle und eine zweite Einspritzöffnungsstelle stromabwärts der ersten Einspritzöffnungsstelle umfassen; und
das Steuern des Verhältnisses von Fließlänge zu Dicke der geschmolzenen Mischung umfasst
Öffnen einer ersten Einspritzöffnung an der ersten Einspritzöffnungsstelle,
Einspritzen der geschmolzenen Mischung durch die erste Einspritzöffnung,
Öffnen einer zweiten Einspritzöffnung an der zweiten Einspritzöffnungsstelle,
Einspritzen der geschmolzenen Mischung durch die zweite Einspritzöffnung, wenn die geschmolzene Mischung die zweite Einspritzöffnungsstelle erreicht hat, und
Schließen der ersten Einspritzöffnung, nachdem die zweite Einspritzöffnung geöffnet wurde.

8. Prozess nach einem der vorstehenden Ansprüche, wobei das Steuern der linearen Geschwindigkeit der geschmolzenen Mischung das Steuern einer Anzahl geöffneter Einspritzöffnungen umfasst.

9. Prozess nach einem der vorstehenden Ansprüche, wobei das Steuern der linearen Geschwindigkeit der geschmolzenen Mischung das Steuern einer Einspritzgeschwindigkeit der geschmolzenen Mischung umfasst.

10. Prozess nach Anspruch 9, wobei das Steuern der Einspritzgeschwindigkeit der geschmolzenen Mischung das Anpassen der Einspritzgeschwindigkeit auf der Grundlage einer Anzahl geöffneter Einspritzöffnungen umfasst.

11. Prozess nach Anspruch 10, wobei mehr als eine Einspritzöffnung geöffnet wird.

12. Prozess nach einem der vorstehenden Ansprüche, wobei das Einspritzen das Einspritzen durch eine Einspritzöffnung umfasst, die eine Querschnittsfläche größer oder gleich 0,15 Quadratzentimeter oder größer oder gleich 0,4 Quadratzentimeter aufweist.

13. Prozess nach einem der vorstehenden Ansprüche, wobei das Einspritzen das Einspritzen durch eine Einspritzöffnung umfasst, die einen kreisförmigen Querschnitt aufweist.

14. Prozess nach einem der vorstehenden Ansprüche, wobei das Einspritzen das Einspritzen durch eine Einspritzöffnung umfasst, die einen rechteckigen Querschnitt aufweist.

15. Prozess nach einem der vorstehenden Ansprüche, wobei das Einspritzen das Einspritzen durch eine Einspritzöffnung umfasst, die einen ovalen Querschnitt aufweist.

## Revendications

1. Procédé de fabrication d'un article expansé comprenant :
l'injection d'un mélange fondu comprenant un agent moussant et une composition polymère dans un moule ; et
la solidification du mélange fondu dans le moule pour former l'article en mousse,
**caractérisé en ce que** l'injection comprend
la commande d'un rapport longueur d'écoulement/épaisseur du mélange fondu pour qu'il soit inférieur à 160, ou inférieur à 120, et
la commande de la vitesse linéaire du mélange fondu dans le moule à une valeur de 40 à 140 centimètres par seconde ou de 50 à 120 centimètres par seconde.

2. Procédé selon la revendication 1, dans lequel l'injection comprend l'ouverture d'un clapet.

3. Procédé selon la revendication 2, dans lequel l'injection comprend l'ouverture progressive d'un clapet.

4. Procédé selon l'une quelconque des revendications précédentes, dans lequel l'injection comprend la fermeture d'un clapet.

5. Procédé selon l'une quelconque des revendications précédentes, dans lequel l'injection comprend la fermeture progressive d'un clapet.

6. Procédé selon l'une quelconque des revendications précédentes, dans lequel la commande du rapport longueur d'écoulement/épaisseur du mélange fondu comprend la fourniture de multiples emplacements de clapet pour l'injection du mélange fondu.

7. Procédé selon la revendication 6, dans lequel :
les multiples emplacements de clapet comprennent un premier emplacement d'injection et un second emplacement d'injection en aval du premier emplacement d'injection ; et
la commande du rapport longueur d'écoulement/épaisseur du mélange fondu comprend
l'ouverture d'un premier clapet au niveau du premier emplacement d'injection,
l'injection du mélange fondu par le premier clapet,
l'ouverture d'un second clapet au niveau du second emplacement d'injection,
l'injection du mélange fondu par le second clapet lorsque le mélange fondu atteint le second emplacement d'injection, et
la fermeture du premier clapet après l'ouverture du second clapet.

8. Procédé selon l'une quelconque des revendications précédentes, dans lequel la commande de la vitesse linéaire du mélange fondu dans le moule comprend la commande d'un certain nombre de clapets d'injection qui sont ouverts.

9. Procédé selon l'une quelconque des revendications précédentes, dans lequel la commande de la vitesse linéaire du mélange fondu dans le moule comprend la commande d'une vitesse d'injection du mélange fondu.

10. Procédé selon la revendication 9, dans lequel la commande de la vitesse d'injection du mélange fondu comprend l'ajustement de la vitesse d'injection sur la base du nombre de clapets ouverts.

11. Procédé selon la revendication 10, dans lequel plus d'un clapet est ouvert.

12. Procédé selon l'une quelconque des revendications précédentes, dans lequel l'injection comprend l'injection à travers un clapet présentant une section transversale supérieure ou égale à 0,15 centimètre carré ou supérieure ou égale à 0,4 centimètre carré.

13. Procédé selon l'une quelconque des revendications précédentes, dans lequel l'injection consiste à injecter à travers un clapet présentant une section transversale de forme circulaire.

14. Procédé selon l'une quelconque des revendications précédentes, dans lequel l'injection consiste à injecter à travers un clapet présentant une section transversale de forme rectangulaire.

15. Procédé selon l'une quelconque des revendications précédentes, dans lequel l'injection consiste à injecter à travers un clapet présentant une section transversale de forme ovale.
